# EUROPEAN PATENT APPLICATION

(11) **EP 4 478 497 A1**
(43) Date of publication of application: **18.12.2024**
(21) Application number: 22925077.4
(22) Date of filing: 13.09.2022
(51) Int. Cl.: H01M 50/152, H01M 50/147, H01M 50/167, H01M 50/186, H01M 10/04, H01M 10/052

(54) **CYLINDRICAL SECONDARY BATTERY**

(30) Priority: 07.02.2022 KR 20220015467
(71) Applicant: SAMSUNG SDI CO., LTD., Giheung-gu Yongin-si, Gyeonggi-do 17084 (KR)
(72) Inventor: JUNG, Hyun Ki, Yongin-si Gyeonggi-do 17084 (KR); KIM, Myung Seob, Yongin-si Gyeonggi-do 17084 (KR); PARK, Gun Gue, Yongin-si Gyeonggi-do 17084 (KR); JEONG, Eui Kwang, Yongin-si Gyeonggi-do 17084 (KR)
(74) Representative: Gulde & Partner
(86) International application number: PCT/KR2022/013648
(87) International publication number: WO 2023/149610

(57) **Abstract**

A cylindrical secondary battery according to the present disclosure comprises: an electrode assembly having a positive electrode plate, a separator, and a negative electrode plate; a cylindrical can, housing the electrode assembly and having an open bottom, in electrical contact with the negative electrode plate; a terminal rivet penetrating the top of the cylindrical can to be in electrical contact with the positive electrode plate; and a cap assembly sealing the bottom end of the cylindrical can, wherein the cap assembly comprises a cap plate, and a gasket covering the entire surface of the cap plate.

## Description

### TECHNICAL FIELD

The present disclosure relates to a secondary battery.

### BACKGROUND ART

Generally, a cylindrical lithium-ion secondary battery includes an electrode assembly, in which a positive electrode plate coated with a positive electrode active material, a negative electrode plate coated with a negative electrode active material, and a separator disposed between the positive electrode plate and the negative electrode plate to prevent short circuit from occurring and allowing lithium ions to move are wound in a cylindrical shape, a cylindrical can in which the electrode assembly is accommodated, a cap assembly that seals an upper portion of the cylindrical can, and an electrolyte injected into the cylindrical can.

In addition, the cylindrical lithium ion secondary battery includes a gasket that is inserted between the cap assembly and the cylindrical can to seal a gap between the cap assembly and the cylindrical can. In the gasket, as a usage time of the secondary battery increases, or if a pressure inside the battery increases, adhesion with the cap assembly or the cylindrical can may be deteriorated. In the cylindrical lithium-ion secondary battery, if sealing force of the gasket is reduced, the electrolyte may leak between the cap assembly and the gasket or between the gasket and the cylindrical can.

The above-described information disclosed in the technology that serves as the background of the present disclosure is only for improving understanding of the background of the present disclosure and thus may include information that does not constitute the related art.

### DISCLOSURE OF THE INVENTION

### TECHNICAL PROBLEM

The present disclosure provides a cylindrical secondary battery, in which a cap plate and a gasket, which constitute a cap assembly, are integrated by insert injection, and thus, a separate process of plating a surface of the cap plate is omitted to simplify a manufacturing process and improve structural rigidity of the cap assembly.

In addition, the present disclosure provides a cylindrical secondary battery, in which a peripheral coupling part of a cap assembly has a thickness greater than that of each of a bent part and a central flat part to improve sealing force if the cap assembly is coupled to a cylindrical can.

In addition, the present disclosure provides a cylindrical secondary battery, in which a cap assembly is provided with an unevenness to support an internal pressure of a cylindrical can.

In addition, the present disclosure provides a cylindrical secondary battery, in which, because both a negative electrode and a positive electrode are provided, if a plurality of cylindrical secondary batteries are electrically connected through a busbar, the plurality of cylindrical secondary batteries are connected on only a top surface to simplify a connection structure of the busbar.

### TECHNICAL SOLUTION

A cylindrical secondary battery according to the present disclosure includes: an electrode assembly including a positive electrode plate, a separator, and a negative electrode plate; a cylindrical can in which the electrode assembly is accommodated and of which a lower end is opened to be electrically connected to the negative electrode plate; a rivet terminal passing through a top surface of the cylindrical can so as to be electrically connected to the positive electrode plate; and a cap assembly configured to seal a lower end of the cylindrical can, wherein the cap assembly includes: a ca plate; and a gasket configured to cover an entire surface of the cap plate.

In some embodiments, the gasket includes: a top surface cover part configured to a top surface of the cap plate; a bottom surface cover part configured to a bottom surface of the cap plate; and an outer surface cover part connected to each of the top surface cover part and the bottom surface cover part to cover an outer surface of the cap plate.

In some embodiments, the top surface cover part may be provided with a convex layer on an edge area connected to the outer surface cover part, and the edge area of the top surface cover part may be thicker than a remaining area.

In some embodiments, the cap plate may include: a protrusion protruding upward; and a concave part that is concave toward the outside of the cylindrical can compared to the protrusion.

In some embodiments, the cap plate may be provided with a vent notch in a bottom surface thereof, and the bottom surface cover part may be configured to cover the vent notch.

In some embodiments, the bottom surface cover part may be provided with a recessed groove at a position corresponding to the vent notch.

In some embodiments, the concave part may be provided with a liquid injection port sealed by a stopper, and the gasket may further include an inner surface cover part connected to each of the top surface cover part and the bottom surface cover part to cover an inner surface of the cap plate.

In some embodiments, the cylindrical can may include: a beading part recessed into the cylindrical can at an upper portion thereof with respect to the cap assembly; and a crimping part provided at a lower portion thereof with respect to the cap plate by bending a lower end of the cylindrical can inward to fix the cap assembly.

In some embodiments, the beading part may include: an upper flat part and a lower flat part, which have outer surfaces facing each other; and a connection part configured to connect the upper flat part to the lower flat part.

In some embodiments, the cap assembly may include: a peripheral coupling part coupled between the beading part and the crimping part; a bent part bent inward and upward from the peripheral coupling part; and a central flat part extending inward from the bent part.

### ADVANTAGEOUS EFFECTS

In the secondary battery according to the present disclosure, the cap plate and the gasket, which constitute the cap assembly, may be integrated by the insert injection, and thus, the separate process of plating the surface of the cap plate may be omitted to simplify the manufacturing process and improve the structural rigidity of the cap assembly.

In addition, according to the present disclosure, the peripheral coupling part of the cap assembly may have the thickness greater than that of each of the bent part and the central flat part to improve the sealing force if the cap assembly is coupled to the cylindrical can.

In addition, according to the present disclosure, the cap assembly may be provided with the unevenness to support the internal pressure of the cylindrical can.

In addition, according to the present disclosure, because both the negative electrode and the positive electrode are provided, if the plurality of cylindrical secondary batteries are electrically connected through the busbar, the plurality of cylindrical secondary batteries may be connected on only the top surface to simplify the connection structure of the busbar.

### BRIEF DESCRIPTION OF THE DRAWINGS

FIG. 1 illustrates a cross-sectional view of an exemplary secondary battery according to the present disclosure.
FIG. 2 illustrates an enlarged view of a portion A of FIG. 1.
FIG. 3 illustrates a view of an exemplary cap assembly according to the present disclosure.
FIG. 4 illustrates a view of an exemplary cap assembly according to the present disclosure.
FIG. 5 illustrates a view of an exemplary cap assembly according to the present disclosure.
FIG. 6 illustrates a view of an exemplary cap assembly according to the present disclosure.
FIG. 7 illustrates a view of an exemplary cap assembly according to the present disclosure.
FIG. 8 illustrates a view of an exemplary cap assembly according to the present disclosure.

### MODE FOR CARRYING OUT THE INVENTION

Hereinafter, exemplary embodiments of the present disclosure will be described in detail with reference to the accompanying drawings.

The present disclosures may, however, be embodied in many different forms and should not be construed as being limited to the embodiments set forth herein; rather, these embodiments are provided so that those skilled in the art thoroughly understand the present disclosure. Rather, these embodiments are provided so that this disclosure will be thorough and complete, and will fully convey the scope of the present disclosure to those skilled in the art.

In addition, in the following drawings, the thickness or size of each layer is exaggerated for convenience and clarity of description, and the same reference numerals in the drawings refer to the same elements. As used herein, the term "and/or" includes any and all combinations of one or more of the associated listed items. In this specification, it will also be understood that if a member A is referred to as being connected to a member B, the member A may be directly connected to the member B or indirectly connected to the member B with a member B therebetween.

The terms used in this specification are for illustrative purposes of the present disclosure only and should not be construed to limit the meaning or the scope of the present disclosure. As used in this specification, a singular form may, unless definitely indicating a particular case in terms of the context, include a plural form. Also, the expressions "comprise/include" and/or "comprising/including" used in this specification neither define the mentioned shapes, numbers, steps, operations, members, elements, and/or groups of these, nor exclude the presence or addition of one or more other different shapes, numbers, steps, operations, members, elements, and/or groups of these, or addition of these. The term "and/or" used herein includes any and all combinations of one or more of the associated listed items.

As used herein, terms such as "first," "second," etc. are used to describe various members, components, areas, layers, and/or portions. However, it is obvious that the members, components, areas, layers, and/or portions should not be defined by these terms. The terms do not mean a particular order, up and down, or superiority, and are used only for distinguishing one member, component, region, layer, or portion from another member, component, region, layer, or portion. Thus, a first member, component, region, layer, or portion which will be described may also refer to a second member, component, region, layer, or portion, without departing from the teaching of the present disclosure.

Spatially relative terms, such as "below", "beneath", "lower", "above", "upper" and the like, may be used herein for ease of description to describe one element or feature's relationship to another element(s) or feature(s) as illustrated in the figures. These spatially relative terms are intended for easy comprehension of the prevent invention according to various process states or usage states of the prevent invention, and thus, the present disclosure is not limited thereto. For example, an element or feature shown in the drawings is turned inside out, the element or feature described as "beneath" or "below" may change into "above" or "upper". Thus, the term "lower" may encompass the term "upper" or "below".

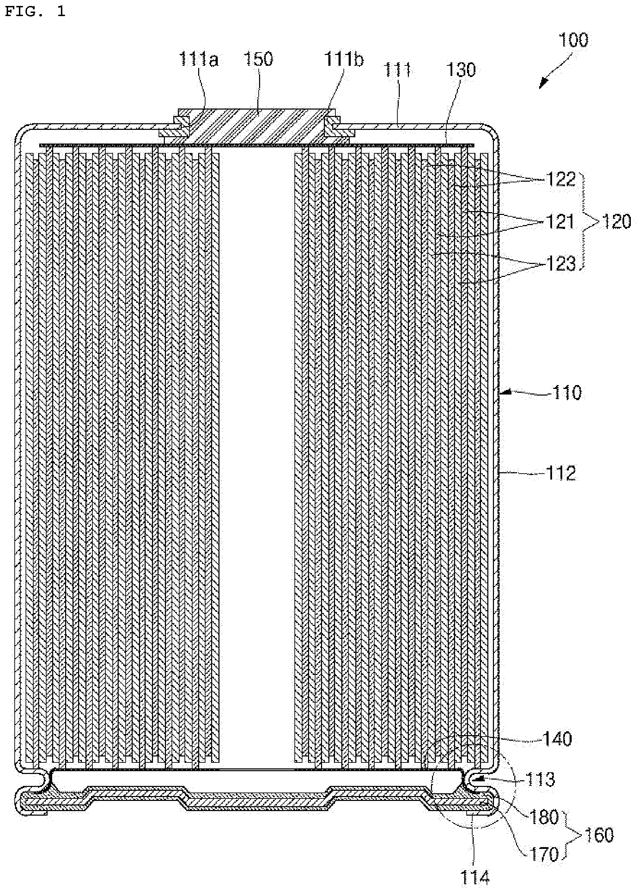

FIG. 1 illustrates a cross-sectional view of an exemplary secondary battery according to the present disclosure.

As illustrated in FIG. 1, a cylindrical secondary battery 100 according to the present disclosure includes a cylindrical can 110, an electrode assembly 120 accommodated inside the cylindrical can, a rivet terminal 150 coupled to a terminal hole provided in an upper end of the cylindrical can, and a cap assembly 160 that seals an opening of a lower end of the cylindrical can 110.

The cylindrical can 110 may be made of steel, a steel alloy, aluminum, an aluminum alloy, or an equivalent and may include a circular top surface part 111 and a side surface part 112 extending by a certain length downward from an edge of the top surface part. The top surface part 111 and the side surface part 112 of the cylindrical can may be integrated with each other.

Here, the circular top surface part 111 may have a flat disk shape and may be provided with a terminal hole 111a passing through a center thereof, and a rivet terminal 150 may be inserted into and coupled to the terminal hole 111a of the top surface part 111.

In addition, a first gasket 111b for sealing and electrical insulation may be further disposed between the terminal hole 111a and the rivet terminal 150, and the first gasket 111b may block contact between the rivet terminal 150 and the cylindrical can 110 to electrically separate the corresponding rivet terminal from the cylindrical can and seal the terminal hole 111a of the top surface part 111 of the cylindrical can 110. Here, the first gasket 111b may be made of a resin material such as polyethylene (PE), polypropylene (PP), polyethylene terephthalate (PET), or the like.

In the cylindrical secondary battery 100, a lower portion of the cylindrical can 110 is opened during a manufacturing process. Thus, during the process of manufacturing the cylindrical secondary battery 100, the electrode assembly 120 may be inserted through the opened lower portion of the cylindrical can 110 together with the electrolyte. Here, the electrolyte and the electrode assembly 120 may be inserted into the cylindrical can 110 in a state in which the opened lower part faces an upper side.

After the electrolyte and the electrode assembly 120 are inserted into the can 110 as described above, the cap assembly 160 may be coupled to the opened lower end to seal the inside of the cylindrical can 110. Here, the electrolyte may serve to enable movement of lithium ions between a positive electrode plate 121 and a negative electrode plate 122, which constitute the electrode assembly 120. The electrolyte may be a non-aqueous organic electrolyte that is a mixture of lithium salt and a high-purity organic solvent. Furthermore, the electrolyte may be a polymer using a polymer electrolyte or a solid electrolyte.

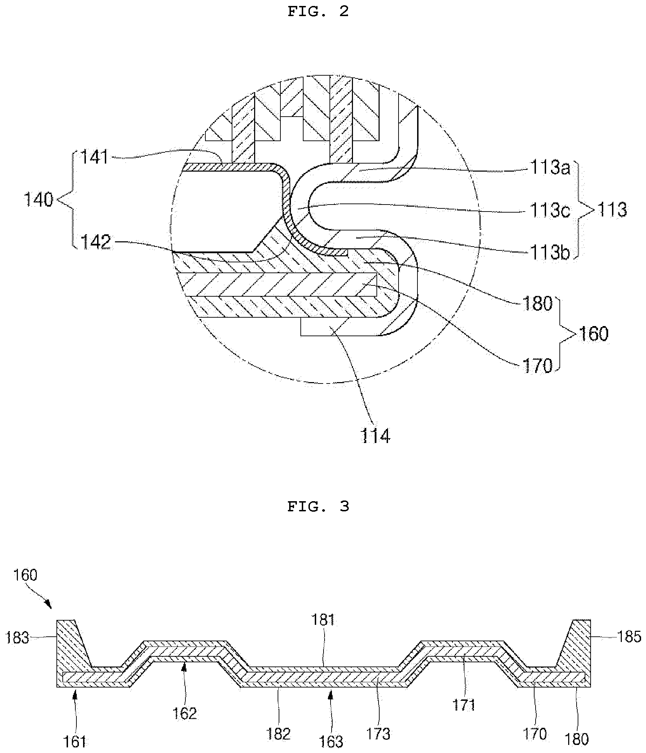

FIG. 2 illustrates an enlarged view of a portion A of FIG. 1.

As illustrated in FIG. 2, in the cylindrical can 110, a beading part 113 recessed inward may be provided in an upper portion of the cylindrical can 110 with respect to the cap assembly 160 to prevent the electrode assembly 120 from being separated, and a crimping part 114 bent inward may be provided at a lower portion of the cylindrical can 110.

In the cylindrical can 110, after the electrode assembly 120 is inserted through the opened lower end of the cylindrical can 110, the beading part 113 may be provided to prevent the electrode assembly 120 from being separated from the cylindrical can 110.

Here, the beading part 113 may include an upper flat part 113a and a lower flat part 113b, which are approximately parallel to the top surface part 111 of the cylindrical can, and a connection part 113c connecting the upper flat part to the lower flat part, and outer surfaces of the upper flat part 113a and the lower flat part 113b may face each other. Here, each of the outer surfaces may be an outer surface of the cylindrical can 110.

An edge of a bottom surface of the electrode assembly 120 may be seated on the upper flat part 113a of the beading part 113 and be in contact with a top surface of the upper flat part.

The electrode assembly 120 includes a positive electrode plate 121 coated with a positive electrode active material, a negative electrode plate 122 coated with a negative electrode active material, and a separator 123 disposed between the positive electrode plate 121 and the negative electrode plate 122 to prevent short circuit from occurring between the positive electrode plate 121 and the negative electrode plate 122 and enabling only the lithium ions to move.

Here, the electrode assembly 120 may be wound from a winding front end in a substantially cylindrical shape after the positive electrode plate 121, the negative electrode plate 122, and the separator 123 are stacked. In some embodiments, in the electrode assembly 120, the positive electrode non-coating portion that is not coated with the positive electrode active material may protrude upward from the positive electrode plate 121, and the negative electrode non-coating portion that is not coated with the negative electrode active material may protrude downward from the negative electrode plate 122.

In the positive electrode plate 121, at least one surface of the positive electrode current collector plate that is a plate-shaped metal foil made of aluminum (Al) may be coated with the positive electrode active material made of transition metal oxide. In addition, the positive electrode plate 121 may be provided with the positive electrode non-coating portion, which is not coated with the positive electrode active material, on an upper portion thereof. The positive electrode non-coating portion may protrude toward an upper side of the electrode assembly 120. That is, the positive electrode non-coating portion of the positive electrode plate 121 may protrude more upward than the negative electrode plate 122 and the separator 123.

In the negative electrode plate 122, at least one surface of the negative electrode current collector plate that is a plate-shaped metal foil made of copper (Cu) or nickel (Ni) may be coated with the negative electrode active material such as graphite or carbon. In addition, the negative electrode plate 122 may be provided with the negative electrode non-coating portion, which is not coated with the negative electrode active material, on a lower portion thereof. The negative electrode non-coating portion may protrude toward a lower side of the electrode assembly 120. That is, the negative electrode non-coating portion of the negative electrode plate 122 may protrude more downward than the positive electrode plate 121 and the separator 123.

The separator 123 may be made of polyethylene (PE) or polypropylene (PP), but the embodiment is not limited thereto. The separator may prevent the electrical short between the positive electrode plate 121 and the negative electrode plate 122 from occurring to allow the lithium ions to move only.

A positive electrode current collector plate 130 may be a circular metal plate having a shape corresponding to the top surface of the electrode assembly 120. A planar size of the positive electrode collector plate 130 may be equal to or less than a size of the top surface of the electrode assembly 120. The positive electrode current collector plate 130 may be made of aluminum (Al). The positive electrode collector plate 130 may be fixed and electrically connected to the positive electrode plate 121 exposed to the upper side of the electrode assembly 120 by welding in a state in which the bottom surface of the positive electrode collector plate 130 is in contact with the top surface of the electrode assembly 120. A top surface of the positive electrode current collector plate 130 may be fixed and electrically connected to the rivet terminal 150 by the welding in a state of being in contact with the bottom surface of the rivet terminal 150. The positive electrode current collector plate 130 may serve as a path for a current flow between the positive electrode plate 121 of the electrode assembly 120 and the rivet terminal 150.

The negative electrode collector plate 140 may include a circular planar part 141 corresponding to the bottom surface of the electrode assembly 120 and an extension part 142 extending downward from an edge of the planar part. Here, a top surface of the planar part 141 may be in contact with the bottom surface of the electrode assembly 120. The top surface of the planar part 141 may be fixed and electrically connected to the negative electrode plate 122 exposed to the lower side of the electrode assembly 120 by welding in a state of being in contact with the bottom surface of the electrode assembly 120.

In addition, the extension part 142 may be bent to extend downward from the edge of the planar part 141 and may be provided in plurality, which are spaced apart from each other along the edge. In addition, the extension part 142 may be in contact with inner surfaces of the connection portion 113c and the lower flat part 113b of the beading part 113. Here, the inner surface may be an inner surface of the cylindrical can 110.

An end of the case welding part 142 may be disposed below the lower flat part 113b of the beading part 113. The extension part 142 may be welded to be in contact with the inner surface of the lower flat part 113b of the beading part 113 and may be fixed and electrically connected to the cylindrical can 110. The negative electrode current collector plate 140 may serves as a flow path of current between the negative electrode plate 122 of the electrode assembly 120 and the cylindrical can 110.

The welding of the extension part 142 and the beading part 113 may be performed in the direction of the extension part 142 in the state in which the negative electrode current collector plate 140 is seated on the lower portion of the beading part 113, before the crimping part 114 of the cylindrical case 110 is provided. In the welding of the extension part 142 and the beading part 113, after sealing the cylindrical can 110, the cylindrical can 110 may be welded to the extension part 142 through the beading part 113 outside the cylindrical can 110. Here, in order to prevent the cap assembly 160 from being damaged due to the welding, the cap assembly may be further provided with a groove in an area corresponding to the welding part.

The rivet terminal 150 may be inserted into the terminal hole 111a provided in the top surface part 111 of the cylindrical can 110 and electrically connected to the positive electrode collector plate 130. The rivet terminal 150 may be made of a material that is the same as or similar to that of each of the positive electrode collector plate 130 and the positive electrode plate 121.

In the rivet terminal 150, each of a diameter of a portion exposed to an upper portion of the cylindrical can 110 and a diameter disposed inside the cylindrical can 110 may be greater than that of a portion disposed in the terminal hole 111a.

The rivet terminal 150 may be coupled to the terminal hole 111a of the top surface part 111 of the cylindrical case 110 upward from the below, and then, the upper end of the rivet terminal 150, which is exposed to an upper side of the cylindrical can 110 may be compressed and deformed through a processing method such as pressing or spinning and be in close contact with the top surface part 111. Here, a first gasket 111b may be disposed between the rivet terminal 150 and the terminal hole 111a to electrically insulate the rivet terminal 150 from the cylindrical case 110 and seal the rivet terminal 150 and the cylindrical case 110. Thus, the rivet terminal 150 may be electrically connected to the positive electrode plate 121 of the electrode assembly 120 through the positive electrode current collector plate 130.

The cap assembly 160 may include a peripheral coupling part 161 coupled between the beading part 113 and the crimping part 114 along a formation area thereof, a bent part 162 bent inward and upward from the peripheral coupling part, and a central flat part 163 extending inward from the bent part.

Specifically, the cap assembly 160 may include a cap plate 170 coupled to a lower end of the cylindrical can 110, and a second gasket 180 that covers an entire surface of the cap plate, and the cap plate 170 and the second gasket 180 may be integrated with each other by insert injection.

Here, each of the cap plate 170 and the second gasket 180 may constitute the peripheral coupling part 161, the bent part 162, and the central flat part 163 according to the formed positions on the cap assembly.

The cap assembly 160 may be fixed by forming the crimping part 114 on the lower end of the cylindrical case 110 in the state in which the peripheral coupling part 161 is seated on the lower portion of the lower flat part 113b of the beading part 113 of the cylindrical case 110. Here, the cap assembly 160 of the cylindrical can 110 may be seated on the beading part 113 in the state in which the opened lower portion of the cylindrical can 110 faces the upper side.

Specifically, the cap assembly 160 may be coupled to the lower end of the cylindrical can 110 by bending the crimping part 114 of the cylindrical can 110 to the inside of the cap assembly 160 to press the second gasket 180 after the cap plate 170 of the corresponding peripheral coupling part is seated in the state in which the second gasket 180 of the peripheral coupling part 161 is disposed at the lower portion of the lower flat part 113b of the cylindrical can 110.

Here, because the end of the negative electrode current collector plate 140 is disposed at the lower flat part 113b of the beading part 113, the cap plate 170 and the cylindrical can 110 may be more easily sealed with the second gasket 180 therebetween.

The cap plate 170 may be provided as a circular metal plate and be coupled to the lower end of the cylindrical can 110 in the state in which the second gasket 180 covers the entire surface to prevent electrical connection with the cylindrical can 110. Because the cap plate 170 is not electrically connected to the positive electrode or the negative electrode of the electrode assembly 120, there may be no separate electrical polarity. The cap plate 170 may be made of only a polymer without a metal.

FIG. 3 illustrates a view of an exemplary cap assembly according to the present disclosure.

In addition, the cap plate 170 may have at least one protrusion 171 protruding upward as illustrated in FIG. 3. For example, the protrusion 171 of the cap plate 170 may be spaced apart from a central portion thereof to protrude upward so as to have a ring shape in the plane. The protrusion 171 may constitute the bent part 162 of the cap assembly 160 together with the second gasket 180.

In addition, the cap plate 170 may further include a concave part 173 that is concave toward the outside of the cylindrical can compared to the protrusion, and the concave part 173 may constitute the central flat part 163 of the cap assembly 160 together with the second gasket 180 to support the internal pressure of the cylindrical can 110. In addition, a bottom surface of the central flat part 163 of the cap assembly 160 may be disposed above the bottom surface of the crimping part 114 of the cylindrical can 110. That is, the crimping part 114 of the cylindrical can 110 may protrude further downward compared to the central flat part 163 of the cap assembly 160.

Thus, if the secondary battery 100 is disposed on one flat surface, the crimping part 114 of the cylindrical case 110 may be in contact with the one surface, and the central flat part 163 of the cap assembly 160 may be spaced apart from the one surface. In addition, because the crimping part 114 of the cylindrical can 110 protrudes further downward compared to the central flat part 163 of the cap assembly 160, even if the cap assembly 160 is expanded due to the internal pressure of the cylindrical can 110, the corresponding cap assembly may be prevented from being in contact with the one surface. Thus, the secondary battery 100 may be maintained in overall height even if the internal pressure of the cylindrical can 110 increases.

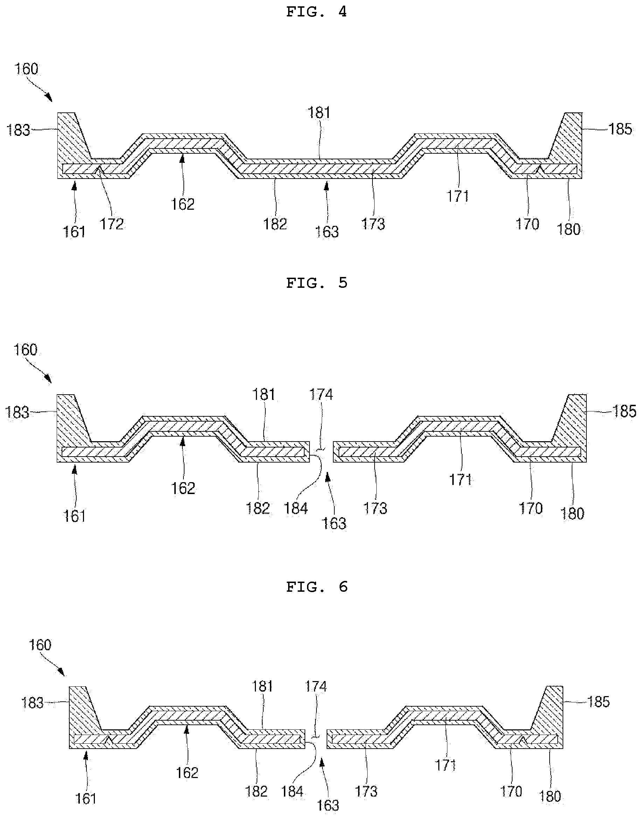

FIG. 4 illustrates a view of an exemplary cap assembly according to the present disclosure.

In addition, as illustrated in FIG. 4, the cap plate 170 may be provided with a vent notch 172 so as to be opened at a set pressure. If the internal pressure of the cylindrical can 110 exceeds a breaking pressure, the vent notch 172 may be broken to prevent the cylindrical secondary battery 100 from being exploded. That is, if the excessive internal pressure is generated inside the cylindrical can 110, the notch 172 is broken, and thus, the excessive internal pressure may be discharged. The vent notch 172 of the cap plate 170 may be spaced apart from a central portion and may be provided in the ring shape on the plane. As another example, the vent notch 172 may be provided to have a plurality of patterns, and the embodiment is not limited to the shape of the vent notch 172.

In addition, the vent notch 172 may be provided to be spaced apart from the protrusion 171. Preferably, the vent notch 172 may be provided in the concave part of the cap plate 170 toward the cylindrical can 110 on which the protrusion 171 is not formed. Because the cap plate 170 is provided with the unevenness by the concave part 173 and the protrusion 171, the cap plate 160 may withstand the internal pressure even if the internal pressure of the cylindrical case 110 increases

FIG. 5 illustrates a view of an exemplary cap assembly according to the present disclosure, and FIG. 6 illustrates a view of an exemplary cap assembly according to the present disclosure.

In addition, as illustrated in FIGS. 5 and 6, the cap plate 170 may be provided with a liquid injection port 174, through which the electrolyte is injected into the concave part 173, in the cap plate 170.

In the present invention, after the electrode assembly 120 is inserted in the state in which the opened lower portion of the cylindrical can 110 faces the upper side, and the cap assembly 160 seals the opening of the cylindrical can, the electrolyte may be injected into the cylindrical can through the liquid injection port 174, and after the electrolyte is inserted into the cylindrical can, the liquid injection port may be sealed using a separate stopper (not shown).

The second gasket 180 may be made of an acrylonitrile butadiene styrene (ABS) resin, polyamide (PA), polybutylene terephthalate (PBT), polycarbonate (PC), and polyoxymethylene (POM) or polypropylene (PP).

The second gasket 180 may be integrated with the cap plate 170 by the insert injection to cover the entire surface of the cap plate, and also, in the cylindrical can 110, the second gasket 180 and the cap plate 170 may be pressed to be sealed therebetween, and the cap plate 170 may be prevented from being separated from the cylindrical can 110.

As illustrated in FIG. 3, the second gasket 180 may include a top surface cover part 181 that covers a top surface of the cap plate 170, a bottom surface cover part 182 that covers a bottom surface of the cap plate, and an outer surface cover part 183 connected to each of the top surface cover part and the bottom surface cover part to cover an outer surface of the cap plate.

Here, the top surface cover part 181 may be provided with a convex layer 185 on an edge area connected to the outer surface cover part. The edge area of the top surface cover part 181 may have a thickness greater than that of a remaining area except for the edge area of the top surface cover part by the corresponding convex layer so that the peripheral coupling part 161 of the cap assembly is provided to be thicker than the bent part 162 and the central flat part 163 of the corresponding cap assembly, and thus, sealing force may increase to prevent the cap assembly from being easily separated from the cylindrical can 110 by external force.

In addition, as illustrated in FIG. 4, if the second gasket 180 is provided with the vent notch 172 in the cap plate 170, the vent notch 172 may be covered to prevent rust from occurring in the vent notch. In addition, as illustrated in FIGS. 5 and 6, if the liquid injection port 174 is provided in the concave part 173 of the cap plate 170, the second gasket 180 may further include an inner surface cover part 184 that covers an inner surface of the corresponding liquid injection port 174.

Here, the inner surface cover part 184 may be connected to each of the top surface cover part 181 and the bottom surface cover part 182 to cover the inner surface of the cap plate, which is defined through the liquid injection port 174.

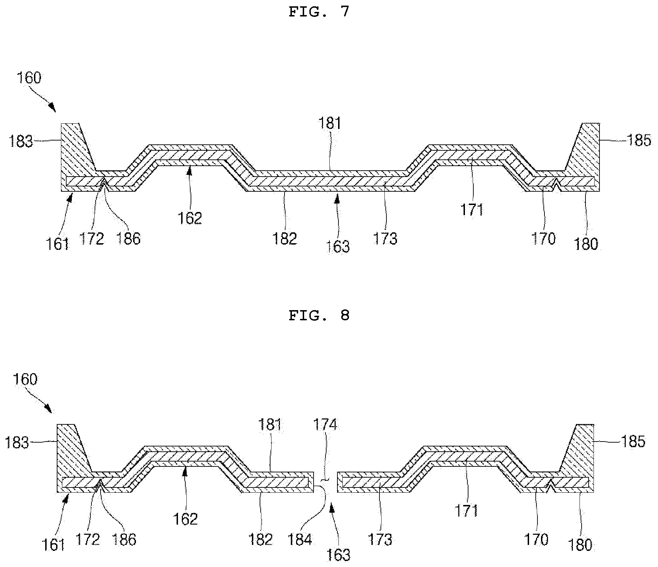

FIG. 7 illustrates a view of an exemplary cap assembly according to the present disclosure, and FIG. 8 illustrates a view of an exemplary cap assembly according to the present disclosure.

Furthermore, as illustrated in FIGS. 7 and 8, the second gasket 180 may be provided with a recessed groove 186 disposed at a position corresponding to the vent notch 172. The recessed groove 186 may have the same shape as the vent notch and the be broken at the same time together with the breakage of the vent notch 172, which occurs if the internal pressure of the cylindrical can 110 exceeds the breaking pressure to release the excessive internal pressure to the outside, thereby preventing the cylindrical secondary battery 100 from being exploded.

The above-mentioned embodiment is merely an embodiment of the cylindrical secondary battery, and thus, the present disclosure is not limited to the foregoing embodiment, and also it will be understood by those of ordinary skill in the art that various changes in form and details may be made therein without departing from the spirit and scope of the present invention as defined by the following claims.

## Claims

1. A cylindrical secondary battery comprising:
an electrode assembly comprising a positive electrode plate, a separator, and a negative electrode plate;
a cylindrical can in which the electrode assembly is accommodated and of which a lower end is opened to be electrically connected to the negative electrode plate;
a rivet terminal passing through a top surface of the cylindrical can so as to be electrically connected to the positive electrode plate; and
a cap assembly configured to seal a lower end of the cylindrical can,
wherein the cap assembly comprises:
a ca plate; and
a gasket configured to cover an entire surface of the cap plate.

2. The cylindrical secondary battery as claimed in claim 1, wherein the gasket comprises:
a top surface cover part configured to a top surface of the cap plate;
a bottom surface cover part configured to a bottom surface of the cap plate; and
an outer surface cover part connected to each of the top surface cover part and the bottom surface cover part to cover an outer surface of the cap plate.

3. The cylindrical secondary battery as claimed in claim 2, wherein the top surface cover part is provided with a convex layer on an edge area connected to the outer surface cover part, and
the edge area of the top surface cover part is thicker than a remaining area.

4. The cylindrical secondary battery as claimed in claim 2, wherein the cap plate comprises:
a protrusion protruding upward; and
a concave part that is concave toward the outside of the cylindrical can compared to the protrusion.

5. The cylindrical secondary battery as claimed in claim 4, wherein the cap plate is provided with a vent notch in a bottom surface thereof, and
the bottom surface cover part is configured to cover the vent notch.

6. The cylindrical secondary battery as claimed in claim 5, wherein the bottom surface cover part is provided with a recessed groove at a position corresponding to the vent notch.

7. The cylindrical secondary battery as claimed in claim 4, wherein the concave part is provided with a liquid injection port sealed by a stopper, and
the gasket further comprises an inner surface cover part connected to each of the top surface cover part and the bottom surface cover part to cover an inner surface of the cap plate.

8. The cylindrical secondary battery as claimed in claim 1, wherein the cylindrical can comprises:
a beading part recessed into the cylindrical can at an upper portion thereof with respect to the cap assembly; and
a crimping part provided at a lower portion thereof with respect to the cap plate by bending a lower end of the cylindrical can inward to fix the cap assembly.

9. The cylindrical secondary battery as claimed in claim 8, wherein the beading part comprises:
an upper flat part and a lower flat part, which have outer surfaces facing each other; and
a connection part configured to connect the upper flat part to the lower flat part.

10. The cylindrical secondary battery as claimed in claim 8, wherein the cap assembly comprises:
a peripheral coupling part coupled between the beading part and the crimping part;
a bent part bent inward and upward from the peripheral coupling part; and
a central flat part extending inward from the bent part.
